# FASCICULE DE BREVET EUROPEEN

(11) **EP 2 025 505 B1**
(45) Date de publication et mention de la délivrance du brevet: **30.06.2010**
(21) Numéro de dépôt: 08161121.2
(22) Date de dépôt: 24.07.2008
(51) Int. Cl.: B32B 3/28, B32B 37/20, B32B 27/20, B32B 27/32

(54) **Feuille pour support d'impression sérigraphique et numérique**
Folie als Druckträger für Siebdruck und Digitaldruck
Sheet for a serigraphic and digital printing medium

(30) Priorité: 25.07.2007 FR 0705429
(43) Date de publication de la demande: 18.02.2009
(73) Titulaire: DS Smith Kaysersberg, 68320 Kunheim (FR)
(72) Inventeur: Coste, Jean-Philippe, 68240 KAYSERSBERG (FR); Porret, Laurent, 68000 COLMAR (FR); Klinger, Yves, 67600 MUTTERSHOLTZ (FR)
(74) Mandataire: David, Daniel

(56) Documents cités:
- EP-A- 1 574 544
- FR-A- 2 803 832

## Description

La présente invention concerne le domaine des feuilles ou plaques en matériau plastique destinées à recevoir une impression notamment par sérigraphie ou bien numérique.

L'invention concerne plus particulièrement les impressions à jet d'encre d'une image numérisée stockée sur un ordinateur, afin de réaliser des panneaux de signalisation ou de communication de grande dimension.

Pour ce type d'application, on recherche un matériau d'une part et une structure de plaque d'autre part qui conduisent à la formation d'un support apte à l'impression. Les propriétés visées sont notamment un état de surface suffisamment lisse pour permettre une impression de qualité par les moyens d'impression conventionnels ainsi qu'une opacité maximale pour assurer le contraste requis. On souhaite par ailleurs que les plaques soient légères pour des raisons économiques ainsi que de manipulation. Enfin la résistance au feu répond à un impératif de sécurité.

On trouve sur le marché par exemple des plaques en PVC expansé qui ont comme avantage d'avoir un aspect lisse, une masse surfacique relativement faible, une très bonne opacité ainsi qu'une résistance au feu satisfaisante. Cependant ce matériau est onéreux et les plaques obtenues sont sensibles aux rayures.

On connaît également des plaques alvéolaires en polypropylène à double paroi obtenues par extrusion à travers une filière spécifique suivie d'un calibrage. Deux ou une pluralité de parois planes, parallèles, sont reliées par des entretoises longitudinales, ménageant des alvéoles dans le sens de la longueur avec les parois. Ces plaques ont pour avantage de présenter une rigidité élevée dans le sens des entretoises, une masse surfacique faible ainsi qu'un coût nettement inférieur à celui du PVC. L'inconvénient principal de ce produit est lié aux retassures à la jonction des entretoises et des parois de surface. De ce fait la planéité de ces dernières n'est pas parfaite, et la surface présente une certaine rugosité pouvant constituer un handicap pour l'impression.

Le déposant s'est donc fixé comme objectif de réaliser une plaque offrant les avantages des plaques de l'art antérieur mais sans les inconvénients.

On connaît des feuilles ou plaques, rigides, à structure en nid d'abeilles, utilisées dans le domaine de l'emballage pour former des enveloppes rigides de type blister. De telles feuilles sont obtenues par assemblage de trois couches : une couche centrale constituée d'une feuille gaufrée avec des bossages de forme cylindrique sur une face et deux couches, une de chaque côté de la couche centrale. La conformation particulière de la couche centrale confère à la feuille ses propriétés mécaniques, telles que rigidité résistance à la charge, ainsi que ses caractéristiques fonctionnelles.

Le brevet EP 1638770 décrit un procédé de fabrication de ce type de feuille.

Conformément à l'invention le procédé de fabrication d'une plaque à structure en nid d'abeille pour une utilisation comme support d'impression, selon lequel on extrude séparément trois films, on thermoforme un film formant la couche centrale avec des bossages à section cylindrique sur une face, et on applique et on lie les deux autres films formant des couches planes sur chacune des faces de la couche centrale, est caractérisé par le fait que le matériau constituant chacune des trois couches est réalisé à partir d'un mélange comprenant en poids
30 à 80% de polypropylène copolymère,
0 à 50% de polypropylène homopolymère,
0 à 10% de polyéthylène basse densité linéaire,
5 à 30% de mélange maître comprenant 40-70% de talc et 0-20% de carbonate de calcium,
1 à 10% de mélange maître colorant blanc contenant 50 à 80% de dioxyde de titane.

Les feuilles ainsi obtenues ont des propriétés proches de celles du PVC expansé pour une masse surfacique inférieure. Pour une même surface imprimée, le gain en poids est de 30 à 50%.

L'aspect de surface est homogène légèrement grainée suite à l'extrusion ce qui permet une accroche optimale de l'encre. La rugosité est nettement inférieure à celle des plaques alvéolaires double paroi en polypropylène. L'effet lignes lié aux entretoises est supprimé.

De préférence, le mélange comprend de 40 à 60% de polypropylène copolymère et/ou de 10 à 30% de polypropylène homopolymère. Le polypropylène a un indice de fluidité à 230°C -2,16kg compris entre 1 et 12g/10min.

De préférence encore le mélange comprend de 2 à 5% de polyéthylène basse densité linéaire et/ou a un indice de fluidité à 190°C-2,16kg compris entre 0,5 et 5g/10min.

On améliore la rigidité de la feuille en incorporant de 10 à 20% de mélange maître comprenant 50 à 60% de talc et 5-10% de carbonate de calcium.

Avantageusement, le mélange comprend jusqu'à 2% de mélange maître opacifiant, en particulier de 5-20% de poudre d'aluminium, et plus particulièrement jusqu'à 0,5% de mélange maître opacifiant contenant10-15% de poudre d'aluminium.

Avantageusement encore le mélange comprend jusqu'à 5% de mélange maître anti-UV, notamment de 10-30% d'amine à encombrement stérique (HALS), notamment de 0 à 2% de mélange maître anti-UV.

Selon un mode de réalisation au moins l'un des films est coextrudé avec un liant, les films étant mis en contact et liés entre eux par le liant.

Le poids de la plaque est compris entre 150g/m² et 4000g/m² mais de préférence le poids de la plaque est compris entre 400 et 3000g/m².

La plaque a une épaisseur comprise entre 1 et 20 mm et de préférence une épaisseur comprise entre 2 et 14 mm.

Le diamètre des bossages sur la couche centrale est choisi entre 3 et 18 mm, de préférence entre 4 et 12 mm.

On utilise la plaque obtenue comme support d'impression.

D'autres avantages et caractéristiques sont présentés avec la description plus en détail qui suit du procédé selon l'invention se référant aux dessins annexés sur lesquels :
La figure 1 représente un exemple de feuille à structure en nid d'abeille.
La figure 2 montre le schéma d'une installation de fabrication de feuille à structure en nid d'abeille.

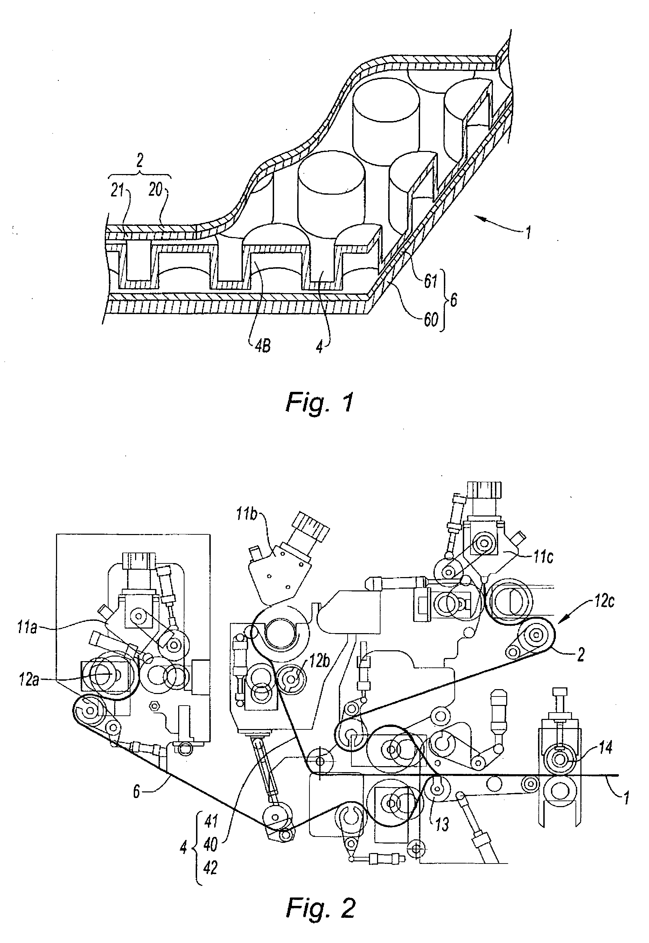

Une structure de feuille ou plaque en nid d'abeille susceptible de convenir pour une utilisation comme support d'impression est montrée sur la figure 1. La feuille 1 est composée de trois couches 2, 4 et 6 respectivement. Une couche centrale 4 prise en sandwich entre deux couches, 2 et 6, de couverture, une couche 6, ici sur la figure, inférieure et une couche 2 supérieure. Ces dernière sont planes et liées par une face à la couche centrale 4. La couche 4 est gaufrée et présente des bossages 41 répartis selon un motif répétitif, de préférence régulier. Les couches 2, 4, 6 sont ici sensiblement de même épaisseur. Toutefois, en fonction des applications qui peuvent varier, on pourrait adopter des épaisseurs de couches différentes.

Dans le mode de réalisation représenté les bossages sont cylindriques droits, à section, parallèle à la couche, circulaire, ovale ou autre. Les bossages cylindriques sont répartis de façon hexagonale sur la couche centrale 4, leur nombre variant en fonction de leur diamètre. Par exemple, la densité de bossages cylindriques par m² varie entre 30 000 et 40 000 pour des bossages cylindriques de 4 mm de diamètre et entre 10 000 et 20 000 pour des bossages cylindriques de 8 mm de diamètre. La hauteur des bossages cylindriques est variable et dépend du diamètre des bossages, la hauteur étant de 2,6 mm pour un diamètre de 4 mm et de 4,5 mm pour un diamètre de 8 mm. Selon d'autres modes de réalisation non représentés, les bossages sont tronconiques ou en forme de dôme.

De préférence la couche centrale 4 présente des bossages 4B s'étendant sur un seul côté de la surface de la couche. L'invention concerne aussi une couche centrale gaufrée différemment, selon un motif symétrique par exemple par rapport au plan de la couche.

La couche inférieure 6 est constituée d'une couche 60 liée à la couche centrale par un liant approprié 61. Ce liant peut être un matériau à activation thermique.

La couche supérieure 2 est constituée d'une couche 20 liée à la couche centrale par le sommet des bossages 4B de cette dernière par un liant approprié 21. Comme pour la couche inférieure ce liant peut être un matériau à activation thermique. Sur cet exemple la couche 4 est simple mais elle peut aussi comprendre une couche 40 revêtue de couches 41 et 42 de liant. Ces dernières participant à la liaison avec les couches supérieure et inférieure.

Un moyen non limitatif pour fabriquer ce produit est illustré sur la figure 2.

L'installation 10 comprend trois têtes d'extrusion 11a 11b et 11c de matière thermoplastique qui délivrent trois feuilles 2, 4 et 6. Immédiatement en aval des têtes d'extrusion 11a et 11c, la feuille est calandrée entre des cylindres de calandrage, 12a et 12c respectivement de façon à calibrer son épaisseur et à assurer un état des surfaces extérieures tel que souhaité. Les feuilles 2 et 6 sont constituées de deux couches coextrudées 20 et 21, 60 et 61 respectivement. Les couches 21 et 61 sont des liants à activation thermique. La feuille centrale 4, éventuellement à trois couches coextrudées : une couche de liant 41 et 42 sur les deux faces de la couche 40, est engagée entre les cylindres d'un groupe de gaufrage. La gravure des cylindres permet d'obtenir le motif du type représenté sur la figure 1.

En aval des trois groupes 12a 12b et 12c les feuilles sont à une température inférieure à la température de ramollissement de la composition.

Les trois feuilles sont ensuite superposées les unes aux autres et soudées ensemble au moyen d'un groupe de soudage 13 qui élève la température des liants au-delà de leur température de ramollissement tout en exerçant une pression de liaison. L'emploi d'un liant permet d'éviter d'avoir à ramollir les couches 20, 40 et 60. La feuille 1 ainsi formée est calandrée à travers le groupe de calibrage 14.

Une telle structure est en soi connue. Conformément à l'invention on emploie un matériau qui permet en combinaison avec cette structure de réaliser un support d'impression particulièrement avantageux aussi bien en termes de qualité d'impression ou de légèreté que de coût.

On a mis au point la composition suivante du mélange qui est extrudé dans chacune des têtes d'extrusion. Les quantités sont en pourcent du poids de la composition extrudée.

Polypropylène copolymère : 30 à 80%, de préférence 40 à 60%, ayant un indice de fluidité à 230°C - 2,16 kg compris entre 1 et 12 g/10 min de préférence compris entre 3 et 8 g/min.

Polypropylène homopolymère : 0 à 50%, de préférence 10 à 30%, ayant le même indice de fluidité à 230°C - 2,16 kg compris entre 1 et 12 g/10 min de préférence compris entre 3 et 8 g/min.

Polyéthylène basse densité linéaire : 0 à 10%, de préférence 2 à 5%, ayant un indice de fluidité à 190°C - 2, compris entre 0,5 et 5 g/10min.

Mélange maître rigidifiant: 5 à 30%, de préférence 10 à 20%, comprenant 40 à 70% de talc et 0 à 20% de carbonate de calcium, de préférence 50 à 60% de talc et 5 à 10% de carbonate de calcium.

Mélange maître ignifugeant : 1 à 20%, de préférence 2 à 15%, contenant de 40 à 90% de substances actives, de préférence 60 à 80%.

Mélange maître colorant blanc, 1 à 10% de préférence 2 à 5%, contenant de 50 à 80% de dioxyde de titane, de préférence de 60 à 75% de dioxyde de titane.

Mélange maître opacifiant, 0 à 2%, de préférence de 0 à 0,5%, contenant de 5 à 20% de poudre d'aluminium, de préférence de 10 à 15% de poudre d'aluminium.

Mélange maître anti-UV, 0 à 5%, de préférence 0 à 2%, contenant par exemple de 10 à 30% d'amine à encombrement stérique (HALS : Hindered Amine Light Stabilizers).

On rappelle qu'un mélange maître est une composition réalisée à partir des composants principaux de la composition à réaliser incorporant les additifs en quantité suffisante pour obtenir un mélange homogène.

Les plaques réalisées avec cette composition présentent une combinaison de propriétés : rigidité, résistance à la rayure, résistance à l'impact, rugosité de surface, remarquable par rapport aux plaques de l'art antérieur.

On a fabriqué selon le procédé rapporté ci-dessus des échantillons de plaques.

### Exemple 1.

Plaque ayant une masse de 1000g/m² ;
Diamètre des bulles ou bossages, 4 mm. (38000 de bulles par m² )
Épaisseur de chaque couche, 300-350µm.

### Composition.

48,7% PP copolymère bloc (indice de fluidité =3,5 g/10 min.)
30% PP homopolymère (indice de fluidité = 5 g/10 min.)
2% polyéthylène basse densité linéaire (indice de fluidité = 1 g/10 min.)
10% Mélange maître à 50% talc et 5% carbonate de calcium.
6% Mélange maître ignifugeant à 70% de substance active.
3% Mélange maître blanc à 75% de dioxyde de titane.
0,3% Mélange maître opacifiant à 12% de poudre d'aluminium.

### Exemple 2.

Plaque ayant une masse de 2000 g/m² ;
Diamètre des bulles, 8 mm.
Épaisseur de chaque couche, 600-700µm.

### Composition.

48,7% PP copolymère bloc (indice de fluidité =3,5 g/10 min.)
30% PP homopolymère (indice de fluidité = 5 g/10 min.)
2% polyéthylène basse densité linéaire (indice de fluidité = 1 g/10 min.)
10% Mélange maître à 50% talc et 5% carbonate de calcium.
6% Mélange maître ignifugeant à 70% de substance active.
3% Mélange maître blanc à 75% de dioxyde de titane.
0,3% Mélange maître opacifiant à 12% de poudre d'aluminium.

### Exemple 3.

Plaque ayant une masse de 1750g/m² ;
Diamètre des bulles ou bossages, 8 mm. (16000 bulles par m² )
Épaisseur de chaque couche, 600-700µm.

### Composition.

82% PP copolymère bloc (indice de fluidité = 7 g/10 min.)
3% polyéthylène basse densité linéaire (indice de fluidité = 1 g/10 min.)
10% Mélange maître à 50% talc et 5% carbonate de calcium.
3% Mélange maître blanc à 60% de dioxyde de titane.
2% Mélange maître anti UV à 20% de HALS.

### Exemple 4.

Plaque ayant une masse de 1000g/m² ;
Diamètre des bulles ou bossages, 4 mm. (38000 de bulles par m² )
Épaisseur de chaque couche, 300-350µm.

### Composition.

78% PP copolymère bloc (indice de fluidité = 7 g/10 min.)
2% polyéthylène basse densité linéaire (indice de fluidité = 1 g/10 min.)
10% Mélange maître à 50% talc et 5% carbonate de calcium.
6% Mélange maître ignifugeant à 70% de substance active.
3% Mélange maître blanc à 75% de dioxyde de titane.

On a testé les plaques ainsi fabriquées par rapport aux plaques de l'art antérieur.

Propriétés en flexion en 3 points mesurée selon la norme ISO 178.

| | Exemple 1 | Exemple 2 | PVC expansé 1 | PVC expansé 2 |
|---|---|---|---|---|
| Épaisseur (mm) | 3,0 | 5,8 | 3,0 | 5,0 |
| Masse (g/m²) | 1000 | 2000 | 2000 | 2800 |
| Rigidité (N/mm) | 4,4 | 19,6 | 5,6 | 21,4 |
| Résistance à la rupture (N) | 36 | 170 | 82 | 205 |

Résistance à la rayure mesurée selon la méthode Erichsen (ISO 4586).

| | Exemple 1 | PVC expansé 1 |
|---|---|---|
| Épaisseur (mm) | 3,0 | 3,0 |
| Masse (g/m²) | 1000 | 2000 |
| Résistance à la rayure (N) | 1,0 | 0,7 |

Résistance à l'impact à froid : test interne à -20°C.

| | Exemple 4 | Exemple 3 | PVC expansé 1 |
|---|---|---|---|
| Épaisseur (mm) | 3,0 | 5, | 3,0 |
| Masse (g/m²) | 1000 | 1750 | 2000 |
| Résistance à l'impact hauteur de casse (mm) | 1300 | 1500 | 500 |

Mesure de rugosité de surface : méthode Bendtsen selon la norme ISO 8791.

| | Exemple 4 | PP alvéolaire avec entretoises |
|---|---|---|
| Épaisseur (mm) | 3,0 | 3,5 |
| Masse (g/m²) | 1000 | 600 |
| Rugosité Bendtsen (ml/min) | 400 | 1000 |

## Revendications

1. Procédé de fabrication d'une feuille (1) à structure en nid d'abeille, selon lequel on extrude séparément trois films (2, 4, 6), on thermoforme un film formant la couche centrale (4) avec des bossages (4B) sur au moins une face, et on applique et on lie les deux autres films (2) formant des couches planes sur chacune des faces de la couche centrale, **caractérisé par le fait que** le matériau constituant chacune des trois couches est réalisé à partir d'un mélange comprenant en poids :
30 à 80% de polypropylène copolymère,
0 à 50% de polypropylène homopolymère,
0 à 10% de polyéthylène basse densité linéaire,
5 à 30% de mélange maître rigidifiant comprenant 40-70% de talc et 0-20% de carbonate de calcium,
1 à 10% de mélange maître colorant blanc contenant 50 à 80% de dioxyde de titane,

2. Procédé selon la revendication 1 dont le mélange comprend de 40 à 60% de polypropylène copolymère et/ou de 10 à 30% de polypropylène homopolymère.

3. Procédé selon l'une des revendications précédentes dont le polypropylène a un indice de fluidité à 230°C -2,16kg compris entre 1 et 12g/10min.

4. Procédé selon l'une des revendications précédentes dont le mélange comprend de 2 à 5% de polyéthylène basse densité linéaire et plus particulièrement le polyéthylène a un indice de fluidité à 190°C-2,16kg compris entre 0,5 et 5g/10min.

5. Procédé selon l'une des revendications précédentes dont le mélange comprend de 10 à 20% de mélange maître comprenant 50 à 60% de talc et 5-10% de carbonate de calcium et plus particulièrement le mélange comprend jusqu'à 2% de mélange maître opacifiant.

6. Procédé selon la revendication précédente dont le mélange maître opacifiant contient de 5-20% de poudre d'aluminium.

7. Procédé selon la revendication 2 dont le mélange comprend jusqu'à 0,5% de mélange maître opacifiant contenant10-15% de poudre d'aluminium.

8. Procédé selon l'une des revendications précédentes dont le mélange comprend jusqu'à 5% de mélange maître anti-UV et plus particulièrement le mélange maître anti-UV contient de 10-30% d'amine à encombrement stérique (HALS).

9. Procédé selon la revendication précédente dont le mélange contient de 0 à 2% de mélange maître anti-UV.

10. Procédé selon l'une des revendications précédentes dont au moins l'un des films est coextrudé avec un liant, les films étant mis en contact et liés entre eux par le liant.

11. Procédé, selon l'une des revendications précédentes, de fabrication d'une feuille à structure en nid d'abeille de poids compris entre 150g/m² et 4000g/m² et plus particulièrement entre 400g/m² et 3000g/m².

12. Procédé, selon l'une des revendications précédentes, de fabrication d'une feuille à structure en nid d'abeille dont l'épaisseur est comprise entre 1 et 20 mm et plus particulièrement entre 2 et 14 mm.

13. Procédé selon l'une des revendications précédentes dont les bossages sont à section cylindrique.

14. Procédé selon l'une des revendications précédentes dont le diamètre des bossages sur la couche centrale est choisi entre 3 et 18 mm, de préférence entre 4 et 12 mm.

15. Utilisation d'une plaque obtenue selon le procédé de l'une des revendications précédentes comme support d'impression.

## Claims

1. Method of manufacturing a sheet (1) with a honeycomb structure, according to which three films (2, 4, 6) are extruded separately, a film forming the central layer (4) is thermoformed with protrusions (4B) on at least one face, and the other two films (2) forming flat layers are applied and bonded on each of the faces of the central layer, **characterised by** the fact that the material constituting each of the three layers is produced from a mixture comprising by weight:
30% to 80% polypropylene copolymer,
0% to 50% polypropylene homopolymer,
0% to 10% linear low-density polyethylene,
5% to 30% stiffening masterbatch comprising 40%-70% talc and 0%-20% calcium carbonate,
1% to 10% white colouring masterbatch containing 50% to 80% titanium dioxide.

2. Method according to claim 1, wherein the mixture comprises 40%-60% polypropylene copolymer and/or 10% to 30% polypropylene homopolymer.

3. Method according to one of the preceding claims, wherein the polypropylene has a melt index at 230°C - 2.16 kg of between 1 and 12 g/10 min.

4. Method according to one of the preceding claims, wherein the mixture comprises 2% to 5% linear low-density polyethylene and more particularly the polyethylene has a melt index at 190°C - 2.16 kg of between 0.5 and 5 g/10 min.

5. Method according to one of the preceding claims, wherein the mixture comprises 10% to 20% masterbatch comprising 50% to 60% talc and 5%-10% calcium carbonate and more particularly the mixture comprises up to 2% of opacifying masterbatch.

6. Method according to the preceding claim, wherein the opacifying masterbatch contains 5%-20% aluminium powder.

7. Method according claim 2, wherein the mixture comprises up to 0.5% opacifying masterbatch containing 10%-15% aluminium powder.

8. Method according to one of the preceding claims, wherein the mixture comprises up to 5% anti-UV masterbatch and more particularly the anti-UV masterbatch contains 10%-30% steric-hindrance amine (HALS).

9. Method according to the preceding claim, wherein the mixture contains 0% to 2% anti-UV masterbatch.

10. Method according to one of the preceding claims, wherein at least one of the films is coextruded with a binder, the films being put in contact and bonded together by the binder.

11. Method, according to one of the preceding claims, of manufacturing a sheet with a honeycomb structure with a weight of between 150 g/m² and 4000 g/m² and more particularly between 400 g/m² and 3000 g/m²_{.}

12. Method, according to one of the preceding claims, of manufacturing a sheet with a honeycomb structure, the thickness of which is between 1 and 20 mm and more particularly between 2 and 14 mm.

13. Method according to one of the preceding claims, wherein the protrusions have a cylindrical cross-section.

14. Method according to one of the preceding claims, wherein the diameter of the protrusions on the central layer is chosen between 3 and 18 mm, preferably between 4 and 12 mm.

15. Use of a plate obtained according to the method of one of the preceding claims as a print medium.

## Patentansprüche

1. Verfahren zur Herstellung einer Folie (1) mit einer Honigwabenstruktur, nach dem getrennt drei Filme (2, 4, 6) extrudiert werden, ein Film thermogeformt wird und die mittlere Schicht (4) mit Höckern (4B) auf mindestens einer Seite bildet, und die zwei anderen Filme (2) anbringt und verbindet, die ebene Schichten auf jeder der Seiten der mittleren Schicht bilden, **dadurch gekennzeichnet, dass** das Material, das jede der drei Schichten bildet, aus einer Mischung hergestellt ist, umfassend nach Gewicht:
30 bis 80 % Polypropylencopolymer,
0 bis 50 % Polypropylenhomopolymer,
0 bis 10 % lineares Polyethylen mit niedriger Dichte,
5 bis 30 % versteifende Vormischung umfassend 40-70 % Talk und 0-20 % Kalziumkarbonat,
1 bis 10 % Vormischung weißer Farbe umfassend 50 bis 80 % Titandioxyd.

2. Verfahren nach Anspruch 1, wobei die Mischung 40 bis 60 % Polypropylencopolymer und/oder 10 bis 30 % Polypropylenhomopolymer umfasst.

3. Verfahren nach einem der vorhergehenden Ansprüche, wobei das Polypropylen eine Weichheitszahl bei 230 °C - 2,16 kg zwischen 1 und 12 g/10 min aufweist.

4. Verfahren nach einem der vorhergehenden Ansprüche, wobei die Mischung 2 bis 5 % lineares Polyethylen mit niedriger Dichte aufweist und insbesondere das Polyethylen eine Weichheitszahl bei 190 °C - 2,16 kg zwischen 0,5 und 5 g/10 min aufweist.

5. Verfahren nach einem der vorhergehenden Ansprüche, wobei die Mischung 10 bis 20 % Vormischung, umfassend 50 bis 60 % Talk und 5 bis 10 % Kalziumkarbonat, umfasst, und insbesondere die Mischung bis zu 2 % trübende Vormischung umfasst.

6. Verfahren nach dem vorhergehenden Anspruch, wobei die trübende Vormischung 5 bis 20 % Aluminiumpulver enthält.

7. Verfahren nach Anspruch 2, wobei die Mischung bis zu 0,5 % trübende Vormischung umfasst, enthaltend 10 bis 15 % Aluminiumpulver.

8. Verfahren nach einem der vorhergehenden Ansprüche, wobei die Mischung bis zu 5 % Anti-UV-Vormischung umfasst und insbesondere die Anti-UV-Vormischung 10 bis 30 % sterisch gehindertes Amin (HALS) enthält.

9. Verfahren nach dem vorhergehenden Anspruch, wobei die Mischung von 0 bis 2 % Anti-UV-Vormischung enthält.

10. Verfahren nach einem der vorhergehenden Ansprüche, wobei mindestens einer der Filme mit einem Bindemittel coextrudiert ist, wobei die Filme untereinander durch das Bindemittel in Kontakt gebracht und verbunden sind.

11. Verfahren nach einem der vorhergehenden Ansprüche zur Herstellung einer Folie mit einer Honigwabenstruktur mit einem Gewicht zwischen 150 g/m² und 4000 g/m² und insbesondere zwischen 400 g/m² und 3000 g/m².

12. Verfahren nach einem der vorhergehenden Ansprüche zur Herstellung einer Folie mit einer Honigwabenstruktur, deren Dicke zwischen 1 und 20 mm und insbesondere zwischen 2 und 14 mm liegt.

13. Verfahren nach einem der vorhergehenden Ansprüche, wobei die Höcker einen zylindrischen Schnitt aufweisen.

14. Verfahren nach einem der vorhergehenden Ansprüche, wobei der Durchmesser der Höcker auf der mittleren Schicht zwischen 3 und 18 mm, vorzugsweise zwischen 4 und 12 mm gewählt wird.

15. Verwendung einer Platte, erhalten nach dem Verfahren eines der vorhergehenden Ansprüche, als Druckträger.
